# EUROPÄISCHE PATENTSCHRIFT

(11) **EP 3 824 722 B1**
(45) Veröffentlichungstag und Bekanntmachung des Hinweises auf die Patenterteilung: **06.09.2023**
(21) Anmeldenummer: 20186685.2
(22) Anmeldetag: 20.07.2020
(51) Int. Cl.: A01K 5/00

(54) **FUTTERMISCHWAGEN**
FEED MIXING VEHICLE
CHARIOT MÉLANGEUR DE FOURRAGE

(30) Priorität: 19.11.2019 DE 202019106424 U
(43) Veröffentlichungstag der Anmeldung: 26.05.2021
(73) Patentinhaber: Trioliet B.V., 7575 BE Oldenzaal (NL)
(72) Erfinder: Liet, Robert Jan, 7573 CS Oldenzaal (NL)
(74) Vertreter: Grünecker Patent- und Rechtsanwälte PartG mbB

(56) Entgegenhaltungen:
- WO-A2-2009/060442
- DE-A1- 10 245 001
- DE-U1-202016 106 837

## Beschreibung

Die Erfindung betrifft einen Futtermischwagen.

Ein Futtermischwagen ist aus DE 20 2016 106 837 U1 bekannt. Der Futtermischwagen ist beispielsweise ein mittels Deichsel gezogener oder selbstfahrender Futtermischwagen, dessen Mischbehälter mit wenigstens zwei Futterkomponenten nacheinander gefüllt wird, und in dem wenigstens ein drehbares Mischorgan dafür sorgt, dass die Futterkomponenten zu einer Futtermischung vermischt werden. Am Mischorgan ist wenigstens ein mitdrehend angeordnetes Sensorsystem zum Überprüfen wenigstens einer der Futterkomponenten und/oder einer daraus gebildeten Futtermischung angeordnet. Ferner umfasst der Futtermischwagen ein Datenübertragungssystem mit wenigstens einem Empfänger und wenigstens einem Sender, die einander in mitdrehender und nicht mitdrehender Anordnung zur drahtlosen Datenübertragung zum Sensorsystem hin und/oder von diesem weg zugeordnet sind.

Während der Herstellung der Futtermischung wird die Zusammensetzung und/oder die Eigenschaften einzelner Futterkomponenten mittels eines optischen NIR-Sensorsystems, das vorzugsweise an der Mischschnecke angeordnet ist, überwacht. Dabei produzierte Messdaten werden über eine Funkverbindung drahtlos an eine Steuerung des Futtermischwagens übertragen. Hierzu kann der Kopf des Sensorsystems, der vorzugsweise mit einem Auswerterechner und/ oder einer Batterie ausgestattet ist, über ein in der Nähe oder im Kopf angeordnetes Bluetooth- oder WiFi-Sendemodul und eine drahtlose Funkverbindung, beispielsweise eine Bluetooth- oder WiFi-Verbindung, mit einem außerhalb des Behälters positionierten Empfänger verbunden sein, wobei der Empfänger z.B. ein WiFi- oder Bluetooth-Modul ist, das mit einer Cloud oder z.B. einem Smartphone kommuniziert. Beim Verbindungsaufbau werden Steuerdaten für das Datenübertragungssystem kontaktlos übertragen.

Die Messdaten können zudem nach drahtloser Datenübertragung außerhalb des Futtermischwagens analysiert und ausgewertet werden, beispielsweise durch Datenspeicherung und/oder Auswertung in einer Cloud oder einem Smartphone. Derart ausgewerteten Daten können dann dazu benutzt werden, den Futtermischwagen bei der Zugabe weiterer Futterkomponenten und deren Vermischung gezielt zu steuern.

Als problematisch hat sich dabei jedoch die Funkübertragung vom innerhalb des Mischbehälters angeordneten Sensorsystem bis zur außerhalb des Mischbehälters angeordneten Steuerung des Futtermischwagens und gegebenenfalls weiter bis zu einem damit kommunizierenden Smartphone herausgestellt. Beispielsweise muss die Funkübertragung auch durch die vergleichsweise stabilen Wände des Futtermischbehälters zuverlässig funktionieren, wofür je nach Anordnung und Füllzustand des Mischbehälters relativ hohe Sendeleistungen nötig sind. Zudem wäre eine Steuerung des sich im Mischbehälter am Mischorgan mitdrehenden Sensorsystems von außen wünschenswert.

Es besteht daher Bedarf für diesbezüglich verbesserte Futtermischwägen.

Die gestellte Aufgabe wird mit einem Futtermischwagen gemäß Anspruch 1 gelöst. Demnach umfasst der Futtermischwagen einen Mischbehälter und wenigstens ein darin drehbar angeordnetes Mischorgan zum Mischen von Futterkomponenten sowie wenigstens ein am Mischorgan mitdrehend angeordnetes Sensorsystem zum Überprüfen wenigstens einer der Futterkomponenten und/oder einer daraus gebildeten Futtermischung. Ferner umfasst der Futtermischwagen ein Datenübertragungssystem mit wenigstens einem Empfänger und wenigstens einem Sender, die einander in mitdrehender und nicht mitdrehender Anordnung zur drahtlosen Datenübertragung zum Sensorsystem hin und/oder von diesem weg zugeordnet sind.

Zudem sind der Empfänger und der Sender derart angeordnet, dass die drahtlose Datenübertragung dazwischen vollständig innerhalb des Mischbehälters erfolgt. Hierfür sind Sender und Empfänger zur kontaktlosen bidirektionalen Datenübertragung mittels Funksignalen und/oder induktiver Kopplung ausgebildet, um dadurch zum einen Steuerdaten für das Sensorsystem und zum anderen mit dem Sensorsystem gewonnene Messdaten und/oder daraus im Sensorsystem berechnete Analysedaten laufend mit dem Datenübertragungssystem zu übertragen.

Dies ermöglicht eine zuverlässige Datenübertragung mit vergleichsweise geringer Sendeleistung zwischen dem mitdrehenden Sensorsystem und einer im Sinne von "nicht mitdrehend" stationären Datenschnittstelle innerhalb des Mischbehälters. Dadurch kann die Datenübertragung zwischen mitdrehenden und stationären Systemkomponenten vereinfacht und flexibler gestaltet werden, insbesondere auch für eine bidirektionale Datenübertragung.

Nicht mitdrehende Komponenten werden nachfolgend zugunsten einer besseren Lesbarkeit auch als stationär bezeichnet. Der Begriff "stationär" bezieht sich somit nur auf die Drehbarkeit des Mischorgans bezüglich des Futtermischwagens insgesamt.

Hinsichtlich der Datenübertragung sind die Begriffe "drahtlos" und "kontaktlos" als Synonyme zu verstehen, die jeweils das Einbeziehen einer drahtlosen/kontaktlosen Übertragungsstrecke zwischen Sender und Empfänger voraussetzt. Dies kann im Sinne einer Übertragungsstrecke durch ein im Wesentlichen elektrisch isolierendes und/oder richtungsunspezifisch leitendes Medium, wie beispielsweise Luft, Futterkomponenten oder dergleichen verstanden werden.

Selbstverständlich umfassen die Sender und Empfänger eine interne Verdrahtung und können beispielsweise Sendespulen, Empfangsspulen und/oder Antennen umfassen.

Unter einer überwiegend und insbesondere vollständig innerhalb des Mischbehälters liegenden Datenübertragung ist zu verstehen, dass die zwischen dem jeweiligen Sender und Empfänger liegende drahtlose Übertragungsstrecke zu mehr als der Hälfte, vorzugsweise zu mehr als 90%, innerhalb des Mischbehälters liegt. Zu diesem Zweck können bezüglich des Futtermischwagens stationäre Sender/Empfänger an der Innenwand des Mischbehälters, in dessen Wand und/oder an dessen Außenwand angeordnet sein. Beispielsweise kann die Wand des Mischbehälters im Bereich stationärer Sender/Empfänger aus einem für die drahtlose Datenübertragung geeignet durchlässigen Material bestehen.

Dies erleichtert insbesondere die drahtlose Datenübertragung zum mitdrehend angeordneten Sensorsystem hin, wofür ansonsten vergleichsweise hohe Sendeleistung außerhalb des Mischbehälters nötig wären oder eine wartungsanfällige kontaktierende Datenübertragung mittels Schleifringen. Steuerbefehle, Steuerdaten oder dergleichen können erfindungsgemäß sowohl effizient als auch zuverlässig an das mitdrehende Sensorsystem übertragen werden.

Vorzugsweise umfasst der Futtermischwagen ferner ein Leistungsübertragungssystem mit wenigstens einer Sendespule und wenigstens einer Empfangsspule zur induktiv resonanten Leistungsübertragung zum Sensorsystem hin. Somit kann das Sensorsystem drahtlos/kontaktlos mit elektrischer Leistung versorgt werden. Dadurch erübrigt sich eine kontaktierende Leistungsübertragung zum Sensorsystem mit den damit verbundenen Nachteilen eines mechanischen Verschleißes der übertragenden Kontakte und deren Wartung mit umfangreichen Montagearbeiten.

Die Sendespule ist dann stationär im Sinne von nicht mitdrehend am Futtermischwagen angeordnet, die Empfangsspule demgegenüber mitdrehend am Mischorgan. Die induktiv resonante Leistungsübertragung ist insbesondere über Luftspalte von bis zu 10 mm zwischen der Sendespule und der Empfangsspule durch geeignete Frequenzanpassung effizient möglich. Auf diese Weise kann elektrische Versorgungsleistung beispielsweise aus einer Batterie ohne Verschleiß zum Sensorsystem übertragen werden. Dafür eignen sich daher auch Stellen des Futtermischwagens, die für Wartungsarbeiten nur mit großem Aufwand zugänglich wären, wie beispielsweise der Bereich eines stationären Lagerrohrs des Mischorgans.

Alternativ kann das Leistungsübertragungssystem aber auch Schleifringe und Gleitkufen zur kontaktierenden elektrischen Leistungsübertragung zum Sensorsystem hin umfassen. Eine kontaktierende Leistungsübertragung ist vor allem an Stellen, die für Wartungsarbeiten relativ gut zugänglich sind, denkbar.

Bei einer weiteren günstigen Ausführungsform umfasst der Futtermischwagen einen elektrischen Generator zur Leistungsversorgung des Sensorsystems, wobei der Generator statorseitig mit dem Mischorgan mitdrehend angeordnet ist und rotorseitig demgegenüber nicht mitdrehend angekoppelt ist, beispielsweise an den Mischbehälter, ein stationäres Lagerrohr oder eine andere stationäre, also nicht mitdrehende Struktur des Futtermischwagens.

Ein statorseitig mit dem Mischorgan mitdrehend angeordneter Generator lässt sich vergleichsweise einfach mit dem Sensorsystem verkabeln. Der Rotor des Generators kann dann beispielsweise mittels eines Reibrads entlang einer stationären Kreisbahn abrollen. Dadurch ist die Leistungsversorgung des Sensorsystems bei sich drehendem Mischorgan ohne stationär am Futtermischwagen mitgeführte Stromquelle möglich.

Vorzugsweise sind der/die Sender und der/die Empfänger des Datenübertragungssystems zur kontaktlosen bidirektionalen Datenübertragung mittels induktiver Kopplung ausgebildet. Eine derartige Datenübertragung ist beispielsweise durch Modulation des von der Sendespule des Leistungsübertragungssystems erzeugten Wechselfelds gegebenenfalls auch bidirektional möglich.

Eine derartige induktive Kopplung, beispielsweise über einen Luftspalt von bis zu 10 mm, lässt vergleichsweise einfach zwischen einem stationären Bestandteil des Mischorgans, beispielsweise einem stationären Lagerrohr, und einem innerhalb davon mitdrehenden Bestandteil des Mischorgans, beispielsweise eines eine Mischwendel tragenden Kernrohrs, realisieren.

Das Kernrohr kann die drahtlose/kontaktlose Übertragungsstrecke dann von der im Mischbehälter hergestellten Futtermischung abschirmen, um so gleichbleibend gute Übertragungseigenschaften zu gewährleisten und mechanische Störeinflüsse zu minimieren. Auf diese Weise lassen sich zuverlässig sowohl Daten, wie beispielsweise ausgewertete Messwerte, im Sensorsystem berechneten Analysedaten und/oder davon abgeleitete Parameter, vom Sensorsystem an eine am Futtermischwagen ausgebildete Steuerung übertragen, als auch Steuerbefehle, Messparameter oder dergleichen von der Steuerung zum mitdrehenden Sensorsystem hin.

Vorzugsweise ist das Datenübertragungssystem derart ausgebildet, dass es die Sendespule und die Empfangsspule des Leistungsübertragungssystems zur wenigstens unidirektionalen, insbesondere bidirektionalen, Datenübertragung durch Modulation eines von der Sendespule erzeugten Wechselfeldes verwendet. Dies ermöglicht eine besonders effiziente Konfiguration, bei der das Datenübertragungssystem vollständig oder zumindest für eine Übertragungsrichtung in das Leistungsübertragungssystem integriert ist. Die zur Modulation nötigen elektronischen Schaltungen des Datenübertragungssystems lassen sich dann ebenso in mitdrehende und/oder stationäre Schaltungsteile des Leistungsübertragungssystems integrieren.

Bei einer weiteren vorteilhaften Ausführungsform des Futtermischwagens sind die Sender und Empfänger zur kontaktlosen bidirektionalen Datenübertragung mittels Funksignalen ausgebildet, insbesondere gemäß Bluetooth-Protokoll. Dies ermöglicht eine besonders flexible Positionierung der Sender und Empfänger, insbesondere bei drahtlosen Übertragungsstrecken von wenigstens 10 mm Länge. Beispielsweise lassen sich stationäre Sender/Empfänger gezielt in Bereichen des Mischbehälters anordnen, in denen sie vor mechanischen Beanspruchungen beim Herstellen der Futtermischung geschützt sind.

Vorzugsweise umfasst der Futtermischwagen ferner ein Steuerungssystem mit einem CAN-Bus und wenigstem einen CAN-Interface zum Anschluss des drahtlosen Datenübertragungssystems an den CAN-Bus. Damit können die Messdaten und/oder daraus berechnete Analysedaten vom Sensorsystem sowie Messparameter, Steuerbefehle oder dergleichen von der zugeordneten, nicht mitdrehend angeordneten Steuerung mittels standardisierter CAN-Nachrichten bidirektional übermittelt werden und somit auch beliebigen Teilnehmern am CAN-Bus zur Verfügung gestellt werden.

Die beschriebene Stromversorgung des mitdrehenden Sensorsystems von einer stationären Stromquelle, wie beispielsweise einer am Futtermischwagen oder an einem zugeordneten Schlepper mitgeführten Batterie, erfordert generell den Aufwand einer kontaktlosen oder kontaktierenden Übertragung zwischen relativ zueinander bewegten Komponenten. Es wäre prinzipiell wünschenswert, den dafür nötigen technischen Aufwand zu vermeiden.

Zu diesem Zweck kann der Futtermischwagen ferner einen elektrischen Generator zur Leistungsversorgung des Sensorsystems umfassen.

Der Generator ist dann statorseitig mit dem Mischorgan mitdrehend angeordnet und rotorseitig demgegenüber nicht mitdrehend angekoppelt, beispielsweise an den Mischbehälter, ein stationäres Lagerrohr des Mischorgans oder dergleichen stationäre Struktur. Dies ermöglicht eine vergleichsweise einfache Verkabelung zwischen dem Generator und dem Sensorsystem auf dem mitdrehenden Mischorgan. Es ist dann keine Leistungsübertragung zwischen stationären, also nicht mitdrehenden, und mitdrehenden Komponenten des Futtermischwagens vonnöten.

Vorzugsweise ist der Generator ein an einem nicht stationären Bestandteil des Futtermischwagens abrollender Reibrad-Dynamo oder ein Nabendynamo. Das Gehäuse eines Reibrad-Dynamos kann vergleichsweise einfach und gut zugänglich an mitdrehenden Bestandteilen des Mischorgans befestigt werden, beispielsweise an einem Abschnitt des Kernrohrs oder dergleichen. Das Reibrad des Generators kann dann beispielsweise entlang einer Kreisbahn an einem stationären Lagerrohr für des Mischorgans abrollen.

Ein Nabendynamo könnte beispielsweise zwischen einer Antriebswelle des Mischorgans und einem zwischen der Antriebswelle und dem Kernrohr des Mischorgans koaxial angeordneten stationären Lagerrohr angeordnet werden. Dies wäre insbesondere in einem oberen Endabschnitt der Antriebswelle / des Mischorgans praktikabel. Eine derartige Stromversorgung des Sensorsystems ist besonders robust.

Insbesondere bei einem Futtermischwagen mit mitdrehend angeordnetem Generator kann das Datenübertragungssystem Schleifringe und Gleitkufen umfassen, die einander in nicht mitdrehender und mitdrehender Anordnung zur kontaktierenden Datenübertragung zum Sensorsystem hin und/oder von diesem weg zugeordnet sind

Bevorzugte Ausführungsformen der Erfindung sind zeichnerisch dargestellt. Es zeigen:
- Fig. 1: einen Teillängsschnitt durch einen Futtermischwagen;
- Fig. 2: eine schematische Darstellung eines drahtlosen Datenübertragungssystems und eines drahtlosen Leistungsübertragungssystems;
- Fig. 3: bevorzugte Einbaulagen induktiv kontaktlos arbeitender Leistungsübertragungssysteme in der Übersicht;
- Fig. 4A: eine obere Einbaulage für kontaktlose Leistungsübertragung und/oder Datenübertragung;
- Fig. 4B: eine mittlere Einbaulage für kontaktlose Leistungsübertragung und/oder Datenübertragung;
- Fig. 4C: eine untere Einbaulage für kontaktlose Leistungsübertragung und/oder Datenübertragung;
- Fig. 5A: eine obere Einbaulage für kontaktierende Leistungsübertragung und/oder Datenübertragung;
- Fig. 5B: eine mittlere Einbaulage für kontaktierende Leistungsübertragung und/oder Datenübertragung; und
- Fig. 5C: eine untere Einbaulage für kontaktierende Leistungsübertragung und/oder Datenübertragung.

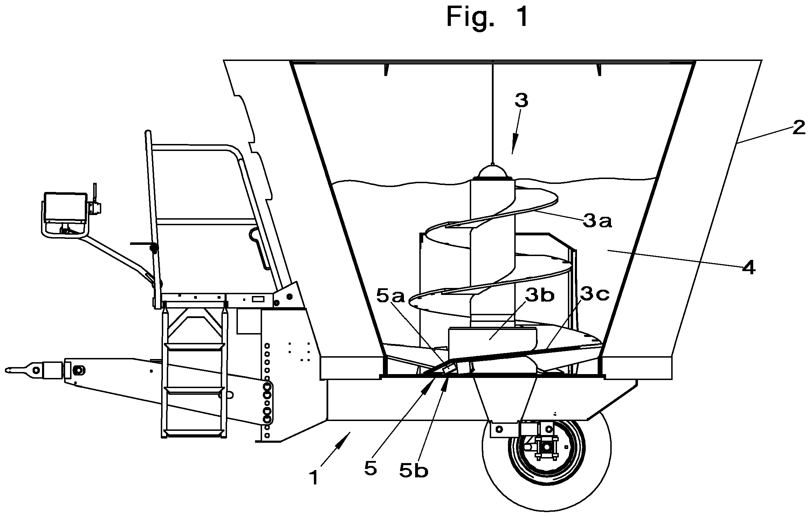

Wie die Fig. 1 erkennen lässt, kann der Futtermischwagen 1 hinsichtlich seines generellen Aufbaus und der Gestalt eines daran vorhandenen Mischbehälters 2 prinzipiell bekannte Konstruktionsmerkmale aufweisen, auf die daher nicht weiter eingegangen wird.

Im Mischbehälter 2 ist wenigstens ein drehbares Mischorgan 3 zum Herstellen einer Futtermischung 4 aus nacheinander zugeführten Futterkomponenten angeordnet. Wenigstens ein Sensorsystem 5 zum Überprüfen der Futterkomponenten und/oder der daraus gebildeten Futtermischung 4 ist am Mischorgan 3 mitdrehend angeordnet.

Das Mischorgan 3 ist vorzugsweise eine um eine vertikale Achse drehbare Mischschnecke mit wenigstens einer Wendel 3a, einem Kernrohr 3b und wenigstens einer im unteren Endbereich des Mischorgans 3 angeordneten Aufnahmeplatte 3c für das Sensorsystem 5.

Das Sensorsystem 5 umfasst wenigstens einen vorzugsweise optischen Sensor 5a, der insbesondere im nahen Infrarot (NIR) arbeitet, und eine elektronische Recheneinheit 5b zur Verarbeitung von Messdaten des Sensors 5a, sodass Analysedaten betreffend die untersuchte Futtermischung 4 bereits vom Sensorsystem 5 aus den Messdaten berechnet werden können. Der (lediglich schematisch angedeutete) Sensor 5a kann beispielsweise hinter einem geeignet transparenten Fenster an der Aufnahmeplatte 3c angeordnet sein und so vor mechanischer Beschädigung beim Herstellen der Futtermischung 4 geschützt werden.

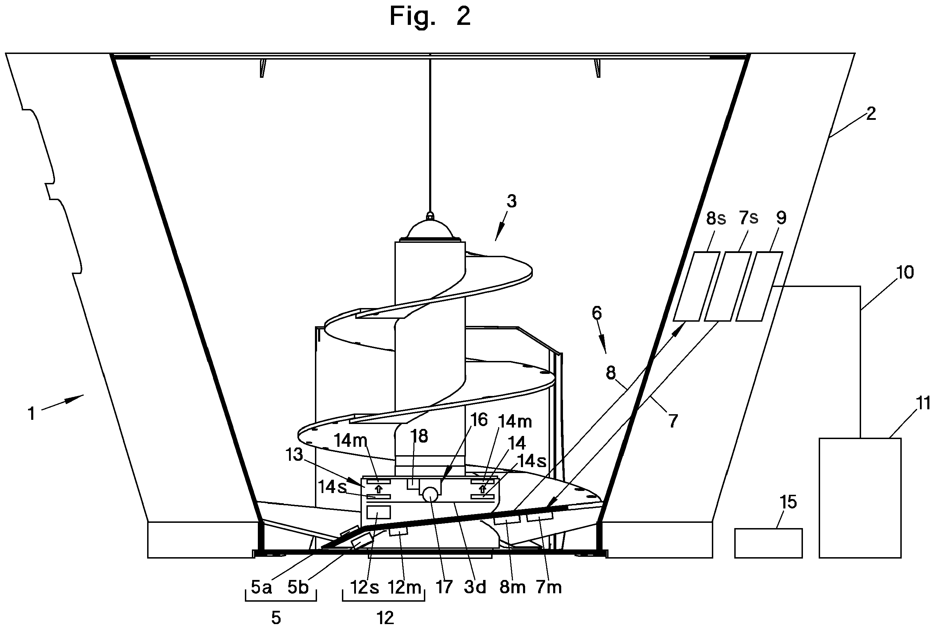

Wie die Fig. 2 in teils schematischer Darstellung andeutet, umfasst der Futtermischwagen 1 im Bereich des Mischbehälters 2 beispielsweise ein funkgestütztes Datenübertragungssystem 6 mit einem stationären Sender 7s und einem zugehörigen mitdrehenden Empfänger 7m zur Datenübertragung 7 zum Sensorsystem 5 hin sowie mit einem mitdrehenden Sender 8m und einem zugehörigen stationären Empfänger 8s zur entgegengesetzten Datenübertragung 8 vom Sensorsystem 5 weg. Die Datenübertragung 7, 8 per Funk ist per Definition drahtlos bzw. kontaktlos.

Die Recheneinheit 5b des Sensorsystems 5 kann mit dem mitdrehenden Sender 8m und dem mitdrehenden Empfänger 7m auf prinzipiell bekannte Weise verdrahtet sein. Mit den mitdrehenden Komponenten des Datenübertragungssystems 6 können in der Recheneinheit 5b verarbeitete Messdaten drahtlos gesendet und Steuerdaten für das Sensorsystem 5 und/oder am Sensorsystem 5 einzustellende Messparameter drahtlos empfangen werden.

Steuerdaten, Messparameter und Messdaten können beispielsweise über ein zugeordnetes CAN-Interface 9 mittels CAN-Bus 10 von einer bzw. an eine Steuerung 11 des Futtermischwagens 1 als CAN-Nachrichten übertragen werden. Die Steuerung 11 kann Bestandteil eines Wiegesystems für den Mischbehälter 2 oder eines anderen Steuerungssystems des Futtermischwagens 1 sein.

Der stationäre Sender 7s und der stationäre Empfänger 8s sind derart im Bereich des Mischbehälters 2 angeordnet, dass die Strecken der kontaktlosen / drahtlosen Datenübertragung 7 zum mitdrehenden Empfänger 7m hin und der kontaktlosen / drahtlosen Datenübertragung 8 vom mitdrehenden Sender 8m weg zum größeren Teil, insbesondere zu wenigstens 90%, und besonders bevorzugt im Wesentlichen vollständig, innerhalb des Mischbehälters 2 liegen.

Zu diesem Zweck sind der stationäre Sender 7s und Empfänger 8s vorzugsweise innerhalb des Mischbehälters 2 angeordnet, können prinzipiell aber auch zumindest teilweise in dessen Wand und/oder außerhalb des Mischbehälters 2 angeordnet sein, beispielsweise im Bereich eines für die Funkübertragung ausreichend durchlässigen Wandabschnitts.

Für die drahtlose / kontaktlose Datenübertragung 7, 8 eignet sich eine Funkverbindung mittels Bluetooth-Protokoll, gemäß diverser WiFi-Standards oder dergleichen.

Ebenso ist die drahtlose Datenübertragung 7, 8 über Strecken von beispielsweise bis zu 10 mm mittels induktiver Kopplung möglich.

Ein auf diesem Prinzip basierendes Datenübertragungssystem 12 lässt sich beispielsweise vorteilhaft in ein Leistungsübertragungssystem 13 zur induktiv resonanten Leistungsübertragung 14 integrieren. Das induktive Leistungsübertragungssystem 13 versorgt das mitdrehende Sensorsystem 5 mit elektrischer Leistung aus einer nicht mitdrehend am Futtermischwagen 1 mitgeführten Stromquelle, gegebenenfalls auch weitere mitdrehend angeordnete elektronische Schaltungen.

Eine derartige Kombination eines induktiv arbeitenden Leistungsübertragungssystems 13 und eines induktiv arbeitenden Datenübertragungssystems 12 wird nachfolgend der Einfachheit halber Daten- und Leistungsübertragungssystem 12, 13 genannt.

Prinzipiell lässt sich die induktive Datenübertragung 7, 8, zumindest unidirektional, aber auch apparativ getrennt von der induktiven Leistungsübertragung 14 durchführen, also mit unabhängig voneinander arbeitenden Übertragungssystemen, die jeweils eigene Sende- und Empfangsspulen umfassen (nicht dargestellt).

Das induktive Leistungsübertragungssystem 13 oder das kombinierte Daten- und Leistungsübertragungssystem 12, 13 umfasst eine stationäre Sendespule 14s und eine mitdrehend angeordnete Empfangsspule 14m zur kontaktlosen Leistungsübertragung 14 mittels eines magnetischen Wechselfelds.

Das von der Sendespule 14s erzeugte Wechselfeld kann vom integrierten Datenübertragungssystem 12 bzw. dem kombinierten Daten- und Leistungsübertragungssystem 12, 13 zusätzlich moduliert werden, um eine unidirektionale oder bidirektionale Datenübertragung 7, 8 durch modulierte induktive Kopplung zu bewirken.

Das induktive Daten- und Leistungsübertragungssystem 12, 13 umfasst hierzu beispielsweise einen mitdrehend angeordneten Sender 12m, der das von der stationären Sendespule 14s erzeugte Wechselfeld mittels der mitdrehend angeordneten Empfangsspule 14m des Daten- und Leistungsübertragungssystems 12, 13 moduliert, und einen an die stationäre Sendespule 14s des Daten- und Leistungsübertragungssystems 12, 13 angeschlossenen stationären Empfänger 12s zur entsprechenden Demodulation.

Die kontaktlose Datenübertragung 7, 8 durch Modulation des von der stationären Sendespule 14s erzeugten Wechselfelds und anschließende Demodulation ist aber auch in umgekehrter Richtung möglich (nicht dargestellt).

Entsprechend kann das induktive Datenübertragungssystem 12 zur unidirektionalen Datenübertragung 7, 8 in beliebiger Richtung oder zur bidirektionalen Datenübertragung 7, 8 in das Daten- und Leistungsübertragungssystem 12, 13 integriert sein.

Denkbar wäre auch, dass das Wechselfeld der Sendespule 14s nur für eine unidirektionale Datenübertragung 7, 8 moduliert wird, und dass ein separates induktives Datenübertragungssystem 12 für die jeweils andere Übertragungsrichtung vorhanden ist und ein separates Spulenpaar zur kontaktlosen Datenübertragung 7, 8 mittels induktiver Kopplung aufweist.

Die induktiv gekoppelte Datenübertragung 7, 8 im Bereich des Daten- und Leistungsübertragungssystems 12, 13 ist in der Fig. 2 der Übersichtlichkeit halber nicht separat dargestellt.

Die elektrische Versorgungsleistung kann von einer vorzugsweise an einem zugeordneten Schlepper, gegebenenfalls aber auch am Futtermischwagen 1 selbst, mitgeführten Batterie 15 als Gleichstrom bereitgestellt werden. Der Gleichstrom wird auf prinzipiell bekannte Weise im stationären Schaltungsteil (nicht dargestellt) des Leistungsübertragungssystems 13 in einen Wechselstrom umgewandelt, beispielsweise mit einer Frequenz von 100 bis 300 kHz. Die Sendespule 14s erzeugt daraus ein Wechselfeld, das in der Empfangsspule 14m, je nach vorliegender Resonanzankopplung, wieder in einen Wechselstrom umgewandelt wird. Dieser fließt durch den mitdrehenden Schaltungsteil (nicht dargestellt) des Leistungsübertragungssystems 13 oder Daten- und Leistungsübertragungssystems 12, 13 und wird dort gleichgerichtet.

Zwischen der stationären Sendespule 14s und der mitdrehenden Empfangsspule 14m sind konstruktiv gut umsetzbare Luftspalte von beispielweise bis zu 10 mm möglich. Dies ist in der Fig. 2 der Übersichtlichkeit halber nicht maßstäblich dargestellt.

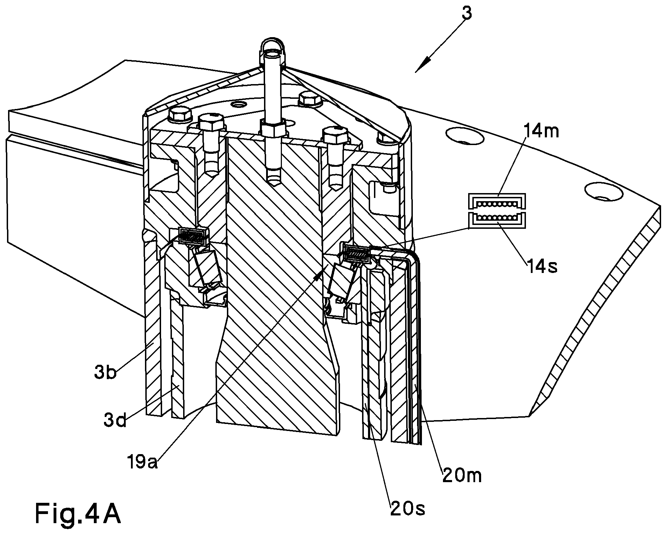

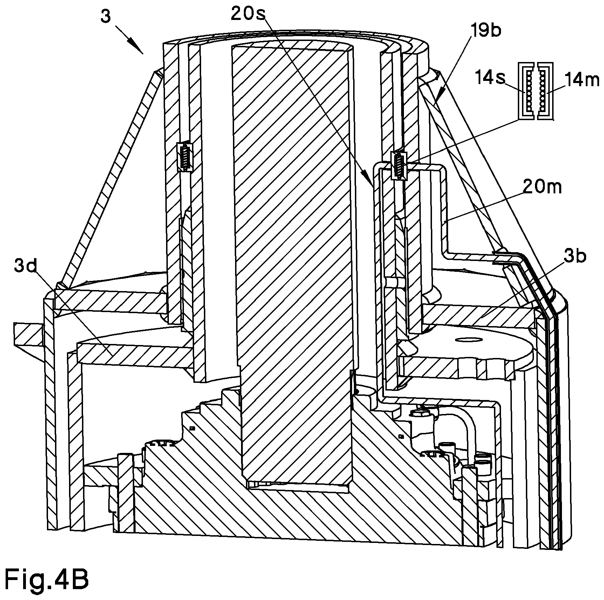

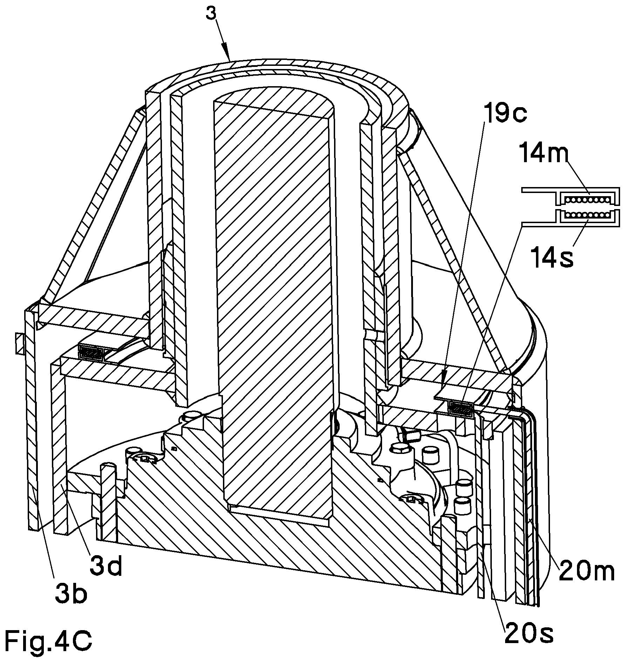

Geeignete mitdrehende und stationäre Strukturen zur Befestigung des induktiven Datenübertragungssystems 12 und/oder des Leistungsübertragungssystems 13 sind in der Fig. 2 der Übersichtlichkeit halber weggelassen, jedoch beispielhaft in den Fig. 4A bis 4C zu erkennen.

Die Übertragung von Mess- und Steuerdaten vom/zum Sensorsystem 5 zwischen weiteren nicht mitdrehenden Komponenten des Futtermischwagens 1 kann prinzipiell drahtlos mittels Funk oder vorzugsweise mittels Verdrahtung erfolgen, insbesondere über den CAN-Bus 10.

Die elektrische Versorgungsleistung und die die Mess- und Steuerdaten werden zwischen den mitdrehenden Komponenten des Mischorgans 3 vorzugsweise mittels herkömmlicher Verdrahtung übertragen. Zugehörige Kabel können beispielsweise am Kernrohr 3b und der Aufnahmeplatte 3c befestigt und/oder in dort vorhandenen Kabelkanälen geführt werden. Dies ist in der Fig. 2 der Übersichtlichkeit halber jedoch nicht dargestellt.

Alternativ zur induktiv resonanten Leistungsübertragung 14 aus einer nicht mitdrehenden Stromquelle, wie der Batterie 15, ist ein statorseitig und somit auch anschlussseitig mitdrehend angeordneter elektrischer Generator 16 zur Leistungsversorgung des Sensorsystems 5 denkbar. Der Generator 16, beispielsweise ein Reibrad-Dynamo, kann auf relativ einfache Weise fest mit dem Sensorsystem 5 verkabelt werden.

Wie in der Fig. 2 schematisch angedeutet ist, kann der Generator 16 rotorseitig mittels eines Reibrads 17 oder dergleichen im Wesentlichen drehfest an eine beliebige nicht mitdrehende Struktur des Futtermischwagens 1 gekoppelt werden, beispielsweise an ein (in der Fig. 2 nur schematisch angedeutetes) innerhalb und/oder unterhalb des Kernrohrs 3b angeordnetes Lagerrohr 3d des Mischorgans 3. Das Reibrad 17 kann an einem horizontalen oder vertikalen Wandabschnitt des Lagerrohrs 3d entlang einer stationären Kreisbahn abrollen und so den Rotor des Generators 16 antreiben.

Da der Generator 16 das Sensorsystem 5 nur bei rotierendem Mischorgan 3 mit elektrischer Leistung versorgen kann, wäre eine an den Generator 16 angeschlossene und mitdrehend angeordnete Pufferbatterie 18 zur Überbrückung von Stillstandzeiten zusätzlich denkbar.

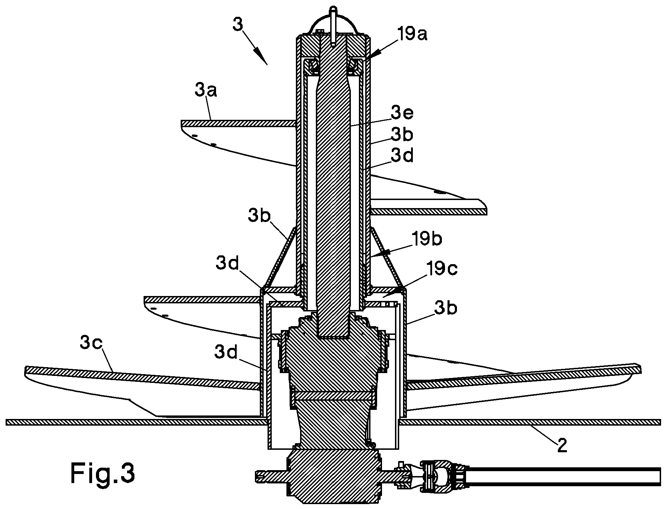

Die Fig. 3 zeigt im Überblick eine mögliche Ausgestaltung des Mischorgans 3 mit beispielhaft bezeichneten Bereichen für eine obere Einbaulage 19a, eine mittlere Einbaulage 19b und eine untere Einbaulage 19c der stationären Sendespule 14s und der mitdrehenden Empfangsspule 14m zur kontaktlosen Leistungsübertragung 14, die ebenso zur induktiven Datenübertragung 7, 8 genutzt werden können.

Dies ist im Detail in den Fig. 4A bis 4C zu erkennen. Zugunsten der Übersichtlichkeit wird vereinfachend angenommen, dass sowohl die Leistungsübertragung 14 als auch die induktive Datenübertragung 7, 8 über die Sendespule 14s und die Empfangsspule 14m erfolgen.

Prinzipiell ließe sich aber auch ein separates Spulenpaar zur induktiven Datenübertragung 7, 8 beispielsweise im Bereich einer der dargestellten Einbaulagen 19a bis 19c anordnen. Ebenso wäre eine unidirektionale oder bidirektionale Datenübertragung 7, 8 über Funk denkbar, also eine Kombination der induktiven Leistungsübertragung 14 und der (zuvor beschriebenen) funkgestützten Datenübertragung 7, 8.

Demnach ist die stationäre Sendespule 14s vorzugsweise an einem horizontalen oder vertikalen Wandabschnitt des stationären Lagerrohrs 3d befestigt, die zugehörige Empfangsspule 14m an einem jeweils gegenüberliegenden Wandabschnitt des sich demgegenüber jeweils außerhalb und/oder oberhalb drehenden Kernrohrs 3b. Auf diese Weise können die Sende- und Empfangsspule 14s, 14m mit relativ geringem Konstruktionsaufwand in einem geeigneten Abstand zueinander angeordnet und dabei ferner zu ihrem Schutz mechanisch abgeschirmt werden.

Zusätzlich angedeutet ist jeweils eine stationäre Verkabelung 20s der Sendespule 14s und eine mitdrehende Verkabelung 20m der Empfangsspule 14m.

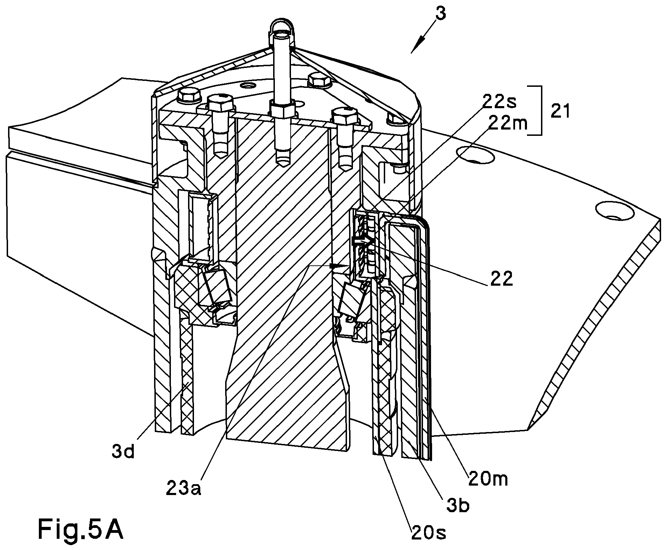

Alternativ zur kontaktlosen Leistungsübertragung 14 zum Sensorsystem 5 ist in der Fig. 5A ein Leistungsübertragungssystem 21 zur kontaktierenden Leistungsübertragung 22 mittels vorzugsweise stationärer Schleifringe 22s und mitdrehender Gleitkufen 22m beispielhaft an einer oberen Einbaulage 23a dargestellt. Bei diesem bekannten Konstruktionsprinzip müssen mechanischer Verschleiß und Wartung der korrespondierenden Kontakte in Kauf genommen werden.

Prinzipiell könnten mit den Schleifringen 22s und Gleitkufen 22m auch CAN-Bussignale mit Steuerbefehlen, Messdaten oder dergleichen, gegebenenfalls auch bidirektional, übertragen werden. Dies ist insbesondere bei einer Leistungsversorgung des Sensorsystems 5 durch den mitdrehend angeordneten Generator 16 denkbar.

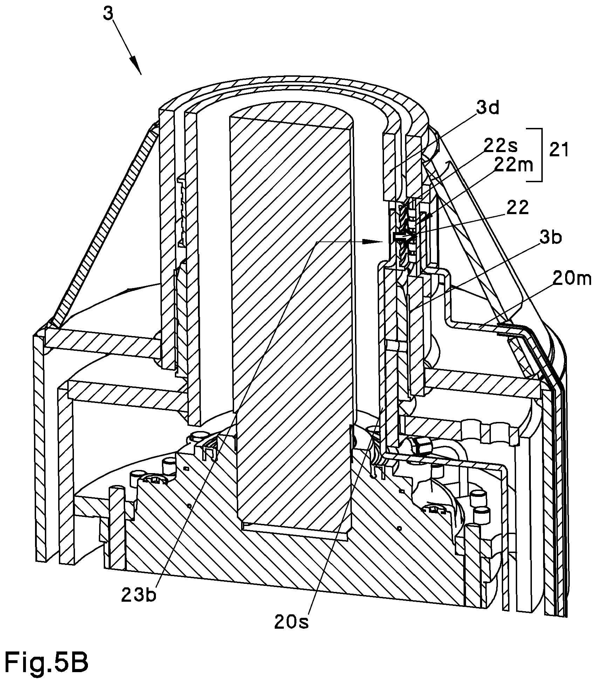

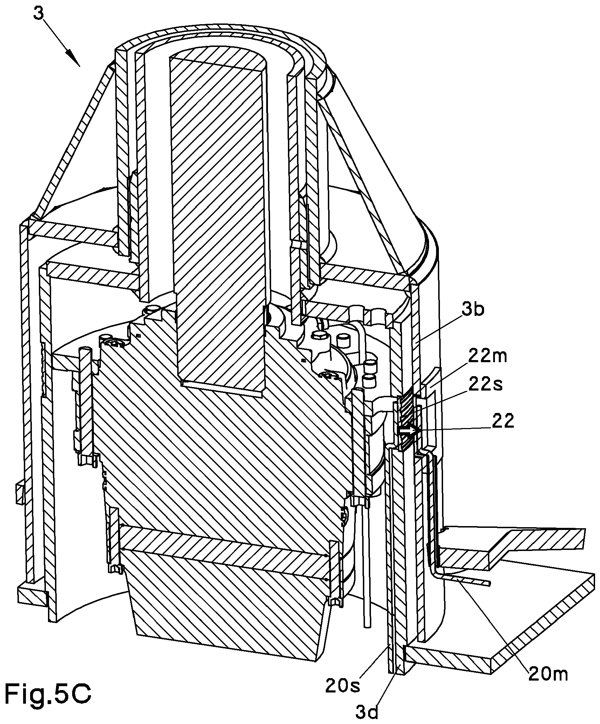

Zum besseren Verständnis sind ferner in der Fig. 5B eine mittlere Einbaulage 23b und in der Fig. 5C eine untere Einbaulage 23c für das Leistungsübertragungssystem 21 mit seinen Schleifringen 22s und Gleitkufen 22m zur kontaktierenden Leistungsübertragung 22, oder gegebenenfalls auch zur kontaktierenden Datenübertagung, beispielhaft angedeutet. Zusätzlich dargestellt sind wiederum eine zugehörige stationäre Verkabelung 20s und eine mitdrehende Verkabelung 20m.

Prinzipiell wäre eine Datenübertragung von insbesondere ausgewerteten Messdaten des Sensorsystems 5 und/oder eine Übertragung von Steuerdaten für das Sensorsystem 5 auch kontaktierend über zugeordnete Schleifringe 22s und Gleitkufen 22m möglich, beispielsweise im Bereich wenigstens einer der Einbaulagen 23a bis 23c.

Die mitdrehende Verkabelung 20m der Spulen oder Kontakte lässt sich relativ einfach an der Außenseite des Kernrohrs 3b, dort beispielsweise bis zur Aufnahmeplatte 3c, führen. Die stationäre Verkabelung 20s lässt sich vorteilhaft an der Innenseite des Lagerrohrs 3d führen.

Wie in der Fig. 3 zu erkennen ist, umfasst das Mischorgan 3 ferner eine zentrale Antriebswelle 3e, die im stationären Lagerrohr 3d koaxial gelagert ist. Prinzipiell wäre es denkbar, den mittels Reibrad 17 angetriebenen Generator 16 (Reibrad-Dynamo) durch einen Generator mit dem Aufbau eines Nabendynamos zu ersetzen. Dessen in diesem Fall mitdrehend angeordnete Statorwicklung wäre hierfür drehfest an die Antriebswelle 3e zu koppeln, der permanentmagnetische Rotor dann demgegenüber an das stationäre Lagerrohr 3d. Dies wäre beispielsweise im Bereich der für die kontaktierende Leistungsübertragung 22 vorgeschlagenen oberen Einbaulage 23a prinzipiell möglich.

Mit dem erfindungsgemäßen Futtermischwagen 1 kann beispielsweise wie folgt gearbeitet werden.

Nach Einschalten der elektrischen Leistungsversorgung des Sensorsystems 5 mittels der Steuerung 11 fließt ein Gleichstrom aus der Batterie 15 zum stationären Schaltungsteil des Leistungsübertragungssystems 13 oder des kombinierten Daten- und Leistungsübertragungssystems 12, 13. Dieser wandelt den Gleichstrom zunächst in einen Wechselstrom von beispielsweise 100 bis 300 kHz um leitet letzteren durch die Sendespule 14s, wodurch ein magnetisches Wechselfeld zur induktiven Resonanzankopplung erzeugt wird.

Die zugeordnete Empfangsspule 14m wandelt das Wechselfeld wieder in einen Wechselstrom um, der im mitdrehend angeordneten Schaltungsteil des Leistungsübertragungssystems 13 oder des kombinierten Daten- und Leistungsübertragungssystems 12, 13 schließlich gleichgerichtet und als Gleichstrom dem Sensorsystem 5 zugeführt wird.

Ferner können mittels Funkübertragung und/oder mittels induktiver Ankopplung Steuersignale von der Steuerung 11 innerhalb des Mischbehälters 2 drahtlos an das mitdrehend angeordnete Sensorsystem 5 für dessen Initialisierung und/oder laufende Anpassung übertragen werden.

Das Sensorsystem 5 wird vorzugsweise für nachfolgende Kontrollmessungen einzelner Futterkomponenten und/oder im Mischbehälter 2 hergestellter Futtermischungen 4 auf diese Weise spezifisch eingestellt.

Das Sensorsystem 5 arbeitet vorzugsweise auf der Grundlage eines optischen, insbesondere im nahen Infrarot (NIR) empfindlichen Sensors 5a, der während des Zugebens einer Futterkomponente in den Mischbehälter 2 im innigen Kontakt mit dieser oder der im Futtermischwagen 1 hergestellten Futtermischung 4 ist.

Beim sukzessiven Zugeben von Futterkomponenten wird das wenigstens eine Mischorgan 3 in Drehung um sich selbst versetzt, um die Futterkomponente und/oder die damit hergestellte Futtermischung 4 möglichst kontinuierlich mit Hilfe des Sensors 5a abzutasten und wenigstens eine Eigenschaft der Futterkomponente und/oder der Futtermischung 4 in Form von Messdaten zu erfassen und der Steuerung 11 zur Verfügung zu stellen. Dies erfolgt vorzugsweise nach Auswertung einzelner Messdaten in der Recheneinheit 5b des Sensorsystems 5.

Die Datenübertragung 7,8 von Steuerdaten für das Sensorsystem 5 und/oder von mit dem Sensorsystem 5 gewonnenen Messdaten und/oder daraus im Sensorsystem 5 berechneten Analysedaten kann laufend drahtlos / kontaktlos per Funk und/oder durch induktive Kopplung mit dem Datenübertragungssystem 6, 12 erfolgen, also mittels im Bereich des Mischbehälters 2 angeordneter stationärer/mitdrehender Paare von Sendern, Empfängern.

Die Auswertung der Messdaten im Sensorsystem 5 anhand dort gespeicherter Kalibrierdaten und Auswertealgorithmen ermöglicht eine besonders hohe Verarbeitungsgeschwindigkeit und eine besonders geringe Fehleranfälligkeit. Auch sind nur relativ kleine Datenpakete pro Datensatz zu übertragen, beispielsweise je sechs Dateien mit je 2 kB. Prinzipiell wäre die Auswertung der Messdaten aber auch in der Steuerung 11 möglich oder in einer Cloud, in der beispielsweise Kalibrierlinien und Algorithmen gespeichert werden können. Die Daten werden in einem Anpassungsprogramm verarbeitet, das vorzugsweise in der Steuerung 11 gespeichert ist bzw. läuft.

Die Verarbeitung der Messdaten kann beispielsweise wie folgt ablaufen. Die Messdaten werden vorzugsweise in der Recheneinheit 5b des Sensorsystems 5a analysiert. Dies ist aber auch in der Steuerung 11, die beispielsweise Bestandteil eines Wiegesystems ist, oder in der Cloud möglich. Die analysierten Daten sind beispielsweise in sechs Dateien zu je 2kB enthalten und werden in der Steuerung 11 im Sinne von Istwerten mit dort gespeicherten Sollwerten verglichen. Diese sind aus dem Wiegesystem und einer Futtermanagement-Software bekannt.

Das weitere Vorgehen, also insbesondere welche Mengen von welcher Futtersorte zugegeben werden sollen, wird vom Anpassungsprogramm innerhalb vorgegebener Wertebereiche und Prozessabläufe bestimmt. Dies ist "online" möglich, aber ebenso kann beispielsweise über den Bildschirm eines Wiegecomputers mit dem Anwender kommuniziert werden, auf welche Weise die Futtermischung 4 fertiggestellt werden soll. Beispielsweise kann kommuniziert werden, ob noch eine zusätzliche Futtersorte zuzumischen ist, und ob deren Menge anzupassen ist. Dies kann sowohl für die aktuell herzustellende Futtermischung 4 gelten als auch für nachfolgend noch herzustellende Futtermischungen 4.

Die Steuersignale/Messdaten werden vorzugsweise über ein am Futtermischwagen 1 nicht mitdrehend angeordnetes CAN-Interface 9 und einen CAN-Bus 10 an die Steuerung 11 des Futtermischwagens 1 übertragen. Dort können die Messdaten analysiert werden und sowohl an ein externes Analysesystem, bzw. an ein Smartphone oder eine Cloud übertragen werden, als auch zur weiteren Steuerung des Mischvorgangs verwendet werden.

Zu diesem Zweck kann die Steuerung 11 über den CAN-Bus 10 und das CAN-Interface 9 Steuerdaten, Steuerbefehle oder dergleichen an den stationären Sender des Datenübertragungssystems 6, 12 übertragen, um die Steuerdaten, Steuerbefehle von dort drahtlos an den mitdrehenden Empfänger des Datenübertragungssystem 6, 12 zu übertragen. Von dort können die Steuerdaten / Steuerbefehle mittels herkömmlicher Verdrahtung an das mitdrehende Sensorsystem 5 weitergeleitet werden. Dadurch lässt sich gegebenenfalls die Messdatenerfassung und/oder eine Messdatenauswertung im Sensorsystem 5 gezielt an neue Gegebenheiten angepasst werden, beispielsweise an die zu erwartenden Eigenschaften einer neu zugemischten Futterkomponente.

Somit ist eine ständige Kontrolle und Anpassung des Mischvorgangs bei gleichzeitig störungsresistenter und effizienter drahtloser Datenübertragung 7, 8 mittels des Datenübertragungssystems 6, 12 gegeben. Hierbei kann die Datenübertragung 7, 8 bidirektional mittels Funk- und/oder induktiver Ankopplung erfolgen.

Die drahtlose Datenübertragung 7, 8 lässt sich sowohl mit einer induktiv gekoppelten Leistungsübertragung 14 zwischen einer Batterie 15 und dem mitdrehenden Sensorsystem 5 kombinieren, als auch mit einer Stromerzeugung unmittelbar am mitdrehenden Teil des Mischorgans 3 mittels daran statorseitig befestigtem Generator 17, aber auch mit einer herkömmlichen kontaktierenden Leistungsübertragung 22 zwischen der Batterie 15 und mitdrehendem Sensorsystem 5 mittels Schleifringen 22s und Gleitkufen 22m.

Die unterschiedlichen Leistungsübertragungssysteme 13, 21 und/oder die Stromerzeugung am mitdrehenden Bestandteil des Mischorgans 3 lassen sich je nach Ausführungsform in unterschiedlichen Bereichen des Kernrohrs 3b, des zugehörigen Lagerrohrs 3d oder ggf. auch im Bereich der Antriebswelle 3e anordnen. Hierbei sind je nach Bauform technische Lösungen möglich, die entweder verschleißfrei arbeiten oder zumindest einen vergleichsweise einfachen Zugang zu den verschleißbehafteten Komponenten ermöglichen.

Die Datenübertragungssysteme 6, 12 und die Leistungsübertragungssysteme 13, 21 lassen sich, ebenso wie ein am mitdrehenden Teil des Mischorgans 3 angeordneter Generator 16, flexibel auch an Futtermischwägen 1 einsetzen, bei denen im Mischbehälter2 mehrere Mischorgane 3 und gegebenenfalls auch mehrere mitdrehenden Sensorsystem 5 vorhanden sind.

Besonders vorteilhaft ist eine Kombination des Datenübertragungssystems 12 und des Leistungsübertragungssystems 13 in einem gemeinsamen Übertragungssystem, das die Sende- und Empfangsspule 14s, 14m sowohl zur drahtlose Datenübertragung 7, 8 als auch zur kontaktlosen Leistungsübertragung 14 nutzt.

Eine geeignete Anzahl stationärer Datenschnittstellen am Mischbehälter 2 lässt sich mittels CAN-Bus 10 problemlos vernetzen, so das eine flexible Überwachung und Steuerung von Mischvorgängen mit vergleichsweise geringem Aufwand möglich ist.

CAN-Nachrichten mit Steuerbefehlen, Analysedaten oder dergleichen könnten prinzipiell auch kontaktierend mit Schleifringen 22s und Gleitkufen 22m übertragen werden, gegebenenfalls auch bidirektional. Dies ist insbesondere dann praktikabel, wenn die Leistungsversorgung durch einen mitdrehend angeordneten Generator 16 erfolgt.

## Patentansprüche

1. Futtermischwagen (1) umfassend: einen Mischbehälter (2) und wenigstens ein darin drehbar angeordnetes Mischorgan (3) für Futterkomponenten; wenigstens ein am Mischorgan mitdrehend angeordnetes Sensorsystem (5) zum Überprüfen wenigstens einer der Futterkomponenten und/oder einer daraus gebildeten Futtermischung (4); und ein Datenübertragungssystem (6, 12) mit wenigstens einem Sender (7s, 8m, 12m) und wenigstens einem Empfänger (7m, 8s, 12s), die einander in mitdrehender und nicht mitdrehender Anordnung zur drahtlosen Datenübertragung (7, 8) zum Sensorsystem hin und/oder von diesem weg zugeordnet sind, wobei die drahtlose Übertragungsstrecke zwischen dem jeweiligen Sender und Empfänger vollständig innerhalb des Mischbehälters liegt, und wobei Sender und Empfänger zur kontaktlosen bidirektionalen Datenübertragung mittels Funksignalen und/oder induktiver Kopplung ausgebildet sind, um dadurch zum einen Steuerdaten für das Sensorsystem und zum anderen mit dem Sensorsystem gewonnene Messdaten und/oder daraus im Sensorsystem berechnete Analysedaten laufend mit dem Datenübertragungssystem zu übertragen.

2. Futtermischwagen nach Anspruch 1, ferner mit einem Leistungsübertragungssystem (13) umfassend wenigstens eine Sendespule (14s) und wenigstens eine Empfangsspule (14m) zur induktiv resonanten Leistungsübertragung (14) zum Sensorsystem (5) hin.

3. Futtermischwagen nach Anspruch 1, ferner mit einem Leistungsübertragungssystem (21) umfassend Schleifringe (22s) zur kontaktierenden elektrischen Leistungsübertragung (22) zum Sensorsystem (5) hin.

4. Futtermischwagen nach Anspruch 1, ferner mit einem elektrischen Generator (16) zur Leistungsversorgung des Sensorsystems (5), wobei der Generator statorseitig mit dem Mischorgan (3) mitdrehend angeordnet ist und rotorseitig demgegenüber nicht mitdrehend angekoppelt ist.

5. Futtermischwagen nach einem der Ansprüche 1 bis 4, wobei Sender (12m) und Empfänger (12s) zur kontaktlosen bidirektionalen Datenübertragung (7, 8) mittels induktiver Kopplung ausgebildet sind.

6. Futtermischwagen nach Anspruch 2 und 5, wobei das Datenübertragungssystem (12) derart ausgebildet ist, dass es die Sendespule (14s) und die Empfangsspule (14m) des Leistungsübertragungssystems (13) zur wenigstens unidirektionalen, insbesondere zur bidirektionalen, Datenübertragung (7, 8) durch Modulation eines von der Sendespule erzeugten Wechselfeldes nutzt.

7. Futtermischwagen nach einem der Ansprüche 1 bis 4, wobei Sender (7s, 8m) und Empfänger (7m, 8s) zur kontaktlosen bidirektionalen Datenübertragung (7, 8) mittels Funksignalen ausgebildet sind, insbesondere gemäß Bluetooth-Protokoll oder eines WiFi-Standards.

8. Futtermischwagen nach wenigstens einem der vorigen Ansprüche, ferner umfassend eine Steuerung (11) mit einem CAN-Bus (10) und wenigstens einem CAN-Interface (9) zum Anschluss des Datenübertragungssystems (6 ,12) an den CAN-Bus.

## Claims

1. Feed mixing vehicle (1) comprising: a mixing container (2) and at least one mixing member (3) arranged rotatable therein for feed components; at least one sensor system (5) arranged to co-rotate on said mixing member for examining at least one of the feed components and/or a feed mixture (4) formed therefrom; and a data transmission system (6, 12) with at least one transmitter (7s, 8m, 12m) and at least one receiver (7m, 8s, 12s) which are associated with one another in a co-rotating and not co-rotating arrangement for wireless data transmission (7, 8) to and/or away from said sensor system, wherein the wireless transmission path between the respective transmitter and the receiver is entirely within the mixing container, and wherein the transmitter and receiver are configured for contactless bidirectional data transmission, by way radio signals and/or inductive coupling, such that, on one hand, control data for said sensor system and, on the other hand, measurement data obtained with said sensor system and/or analysis data calculated therefrom in said sensor system can be continuously transmitted with said data transmission system.

2. Feed mixing vehicle according to claim 1, further with a power transmission system (13) comprising at least one transmitter coil (14s) and at least one receiver coil (14m) for inductively resonant power transmission (14) to said sensor system (5).

3. Feed mixing vehicle according to claim 1, further comprising a power transmission system (21) comprising slip rings (22s) for contacting electrical power transmission (22) to said sensor system (5).

4. Feed mixing vehicle according to claim 1, further with an electrical generator (16) for supplying power to said sensor system (5), where said generator is arranged on the stator side to co-rotate rotate with said mixing member (3) and on the rotor side, on the other hand, is coupled not to co-rotate.

5. Feed mixing vehicle according to one of the claims 1 to 4, where said transmitter (12m) and said receiver (12s) are formed for contactless bidirectional data transmission (7, 8) by way of an inductive coupling.

6. Feed mixing vehicle according to claims 2 and 5, where said data transmission system (12) is preferably configured such that it uses said transmitter coil (14s) and said receiver coil (14m) of said power transmission system (13) for at least unidirectional, in particular for bidirectional data transmission (7, 8) by modulating an alternating field generated by said transmitter coil.

7. Feed mixing vehicle according to one of the claims 1 to 4, where said transmitter (7s, 8m) and said receiver (7m, 8s) are formed for contactless bidirectional data transmission (7, 8) by way of radio signals, in particular following the Bluetooth protocol or a WiFi standard.

8. Feed mixing vehicle according to at least one of the preceding claims, further comprising a control device (11) with a CAN bus (10) and at least one CAN interface (9) for connecting said wireless data transmission system (8, 12) to said CAN bus.

## Revendications

1. Chariot mélangeur de fourrage (1) comprenant : un récipient de mélange (2) et au moins un organe de mélange (3) disposé de manière à pouvoir tourner dans celui-ci pour des composants de fourrage ; au moins un système de capteurs (5) disposé de manière à pouvoir tourner avec l'organe de mélange pour contrôler au moins l'un des composants de fourrage et/ou d'un mélange de fourrage (4) formé à partir de ceux-ci ; et un système de transmission de données (6, 12) avec au moins un émetteur (7s, 8m, 12m) et au moins un récepteur (7m, 8s, 12s), qui sont associés l'un à l'autre dans un agencement tournant et non tournant pour la transmission de données sans fil (7, 8) vers le système de capteurs et/ou à partir de celui-ci, la distance de transmission sans fil entre l'émetteur et le récepteur respectifs se trouvant entièrement à l'intérieur du récipient de mélange, et l'émetteur et le récepteur étant conçus pour la transmission bidirectionnelle de données sans contact au moyen de signaux radio et/ou d'un couplage inductif, afin de transmettre ainsi en continu avec le système de transmission de données d'une part des données de commande pour le système de capteurs et d'autre part des données de mesure obtenues avec le système de capteurs et/ou des données d'analyse calculées à partir de celles-ci dans le système de capteurs.

2. Chariot mélangeur de fourrage selon la revendication 1, comprenant en outre un système de transmission de puissance (13) comprenant au moins une bobine émettrice (14s) et au moins une bobine réceptrice (14m) pour la transmission de puissance (14) à résonance inductive vers le système de capteurs (5).

3. Chariot mélangeur de fourrage selon la revendication 1, comprenant en outre un système de transmission de puissance (21) comprenant des bagues collectrices (22s) pour la transmission de puissance électrique par contact (22) au système de capteurs (5).

4. Chariot mélangeur de fourrage selon la revendication 1, comprenant en outre un générateur électrique (16) pour l'alimentation en puissance du système de capteurs (5), le générateur étant disposé du côté du stator en tournant avec l'organe de mélange (3) et étant couplé en revanche du côté du rotor sans tourner avec lui.

5. Chariot mélangeur de fourrage selon l'une des revendications 1 à 4, dans lequel l'émetteur (12m) et le récepteur (12s) sont conçus pour la transmission bidirectionnelle de données sans contact (7, 8) au moyen d'un couplage inductif.

6. Chariot mélangeur de fourrage selon les revendications 2 et 5, le système de transmission de données (12) étant conçu de telle sorte qu'il utilise la bobine émettrice (14s) et la bobine réceptrice (14m) du système de transmission de puissance (13) pour la transmission de données (7, 8) au moins unidirectionnelle, en particulier bidirectionnelle, par modulation d'un champ alternatif généré par la bobine émettrice.

7. Chariot mélangeur de fourrage selon l'une quelconque des revendications 1 à 4, dans lequel l'émetteur (7s, 8m) et le récepteur (7m, 8s) sont conçus pour une transmission bidirectionnelle de données sans contact (7, 8) au moyen de signaux radio, notamment selon le protocole Bluetooth ou un standard WiFi.

8. Chariot mélangeur de fourrage selon au moins l'une des revendications précédentes, comprenant en outre une commande (11) avec un bus CAN (10) et au moins une interface CAN (9) pour le raccordement du système de transmission de données (6, 12) au bus CAN.
